# EUROPÄISCHE PATENTSCHRIFT

(11) **EP 1 312 902 B1**
(45) Veröffentlichungstag und Bekanntmachung des Hinweises auf die Patenterteilung: **28.08.2013**
(21) Anmeldenummer: 02102677.8
(22) Anmeldetag: 24.09.2001
(51) Int. Cl.: G01G 21/28

(54) **Waage mit Wägeraum**
Scale with weighing place
Balance avec un espace de pesage

(30) Priorität: 04.10.2000 CH 20001958
(43) Veröffentlichungstag der Anmeldung: 21.05.2003
(62) Teilanmeldung aus: 01203643.0
(73) Patentinhaber: Mettler-Toledo AG, 8606 Greifensee (CH)
(72) Erfinder: Lüchinger, Paul, 8610, Uster (CH)

(56) Entgegenhaltungen:
- EP-A- 0 234 008
- EP-A- 0 574 668

## Beschreibung

Die Erfindung bezieht sich auf eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist.

Eine solche Waage ist beispielsweise aus der EP-A-0 234 008 bekannt. Dabei handelt es sich um eine Waage mit einer Waagschale und mit einem die Waagschale allseits umschliessenden Wägeraum, mit einem feststehenden Frontglas, je einer seitlich nach hinten verschiebbaren Schiebetür, einer nach hinten verschiebbaren oberen Abdeckung und einer die Schiebetüren mit der oberen Abdeckung verbindenden Halterung, wobei sich die Halterung beim Öffnen und Schliessen der Seitenwände und/oder der Abdeckwand mittels Lager mit diesen mitbewegt und somit den Zugang zum Wägeraum, ohne behindernde Stege an den Seiten vollständig freigeben kann. Auch können die beiden Seitenwände einzeln oder synchron gemeinsam, mit oder ohne die Abdeckwand verschoben werden. Die Verschiebung kann motorisch erfolgen oder von Hand, wobei bei Handbetrieb die zu verschiebenden Scheiben vom Antrieb abgekoppelt werden.

In der EP-A-0 574 668 ist eine Waage offenbart mit einer oberen Abdeckwand eines Windschutzgehäuses, die mit Hilfe einer manuell betätigbaren Verriegelung befestigbar bzw. abnehmbar ist. Nach Abnahme der Abdeckwand ist es möglich, sowohl die Vorderwand als auch die Seitenwände zum Zwecke der Reinigung vollständig aus dem Gehäuse zu entfernen. Bei dieser bekannten Ausführung ist die Abdeckwand Teil eines das Windschutzgehäuse zusammenhaltenden Rahmens, der allerdings den darunter liegenden Wänden eine gewisse Stegfreiheit, und damit eine bessere Sicht auf das Innere des Windschutzgehäuses, zugesteht, allerdings für manche Anwendungen noch nicht ganz befriedigend ist. Denn zum einen ist es nicht möglich, auf den oberen Rahmen zu verzichten, zum anderen bedingt diese Ausführung auch eine gewisse Manipulation an den Riegeln, die mit hoher Präzision gefertigt sein müssen, um mit den sie aufnehmenden Ausnehmungen zu fluchten.

Nach dem Stand der Technik ist der flexible Zugang für Leitungen, Schläuche etc. bislang meistens verbunden mit dem zumindest teilweise Offen-belassen einer verschiebbaren Seitenwand oder der Abdeckung während des Wägevorgangs, da starre Rahmenkonstruktionen und aufwendige Führungsvorrichtungen keine individuellen und leicht zugänglichen Durchführungen in den Wänden erlauben. Ein Offen-belassen einer Wand kann jedoch das Wägeresultat verfälschen.

Die wesentlichen Nachteile der bekannten Waagen bestehen darin, nur eine beschränkte freie Zugänglichkeit des Wägeraumes bei gleichzeitig freier Sicht in den Wägeraum und umgekehrt zu besitzen. Die Zugänglichkeit von der Seite und von oben und gleichzeitig von vorne ist nicht gegeben, insbesondere gilt dies auch für die Zugänglichkeit für Zufuhrleitungen.

Der Erfindung liegt daher die Aufgabe zugrunde, eine gute Zugänglichkeit des Wägeraums in einfacher Weise bzw. mit geringem Manipulationsaufwand für die Zuführung von Zufuhrleitungen zu sichern.

Diese Aufgabe wird erfindungsgemäss mit den Merkmalen des Anspruchs 1 gelöst.

Für eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist, sind in den Seiten der Seitenwände und/oder der Vorderwand und/oder der Abdeckwand und/oder der Rückwand Aussparungen zur Durchführung von Leitungen vorgesehen.

Damit bietet sich eine Vielzahl von Anwendungsmöglichkeiten der Waage an, insbesondere deren Verwendung als Experimentierwaage, mit welcher unter Beobachtung von Gewichtsveränderungen mit dem Wägegut experimentiert werden kann, beispielsweise dosiert oder eine chemische Reaktion durchgeführt werden kann.

In besonders vorteilhafter Weise sind die Aussparungen mittels Clips gegen Windzug verschliessbar.

Das Vorhandensein der Aussparungen liefert einen einfachen Weg, elektrische Versorgungsleitungen oder Datenleitungen oder auch Zuführungen für andere Medien (Flüssigkeits- oder Gasleitungen) in diese einzulegen und mittels spezieller Clips in den Aussparungen noch zu fixieren und jene gegen Zugluft abzudichten. Spezielle Ausführungsformen der Clips, beispielsweise als Halterungen, erweitern das Spektrum ihrer Verwendbarkeit.

Die Seitenwände, die Vorderwand und die Abdeckwand lassen sich einzeln von Hand durch eine einfache Schwenkbewegung nach aussen mit leichtem Zug von der Waage trennen, z. B. um die in der Regel aus Glas bestehenden Scheiben leicht reinigen zu können. Die Wände sind in der Gebrauchslage in Führungselementen der Führungsvorrichtung formschlüssig verriegelt. Die Entriegelung erfolgt für alle Wände durch eine einheitliche Handbewegung. Dadurch, dass Halterungen für die bewegbaren Wände vorhanden sind, welche in die Führungsvorrichtungen integriert sind, ist neben der Zerlegbarkeit zum Zwecke der Reinigung eine freie Zugänglichkeit des Wägeraums gewährleistet, wobei auch im geschlossenen Zustand des Wägeraums keine sichtbehindernden Stege vorhanden sind. Im übrigen besteht die Möglichkeit, die Vorderwand sowie die bewegbaren Wände durch eine einfache manuelle Betätigung in eine stabile Schräglage zu bringen.

In einer speziellen Ausgestaltung der Erfindung verfügt die Waage über eine Zusatzeinheit, die sich beispielsweise am hinteren Ende der Waage befindet. Diese Zusatzeinheit enthält Versorgungseinheiten und/oder Steuerungseinheiten. Die mit Durchführungen an dieser Einheit verbundenen Leitungen können über spezielle am Waagengehäuse angebrachte Führungsrinnen den Aussparungen in den Wänden der Waage zugebracht werden. Damit kreuzen sie nicht störend den Verschiebeweg der Seitenwände.

Weitere Einzelheiten der Erfindung ergeben sich an Hand der nachfolgenden Beschreibung von in den Zeichnungen schematisch dargestellten Ausführungsbeispielen. Es zeigen:
- Fig. 1: eine erfindungsgemässe Waage in Perspektive von vorne,
- Fig. 2: eine mögliche Anwendung der Aussparungen in der Rückwand, Ansicht von oben,
- Fig. 3: eine mögliche Anwendung der Clips als Halter, Ansicht von vorne,
- Fig. 4: eine mögliche Anwendung der Clips für eine Ausführungsform der Waage mit niedrigeren Scheiben, im Schnitt,
- Fig. 5: eine Waage von schräg hinten mit Zusatzeinheit, Haltevorrichtung und Führungsrinnen in 3-dimensionaler Darstellung.

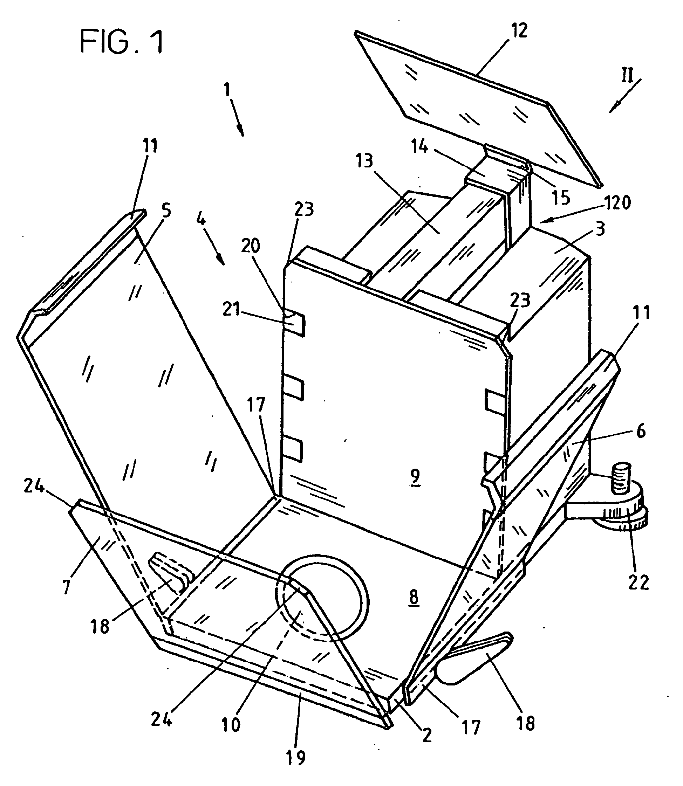

Eine Waage 1 gemäss Figur 1 besteht aus einem, die Rückwand 9 und den Boden 8 des Wägeraums 4 bildenden feststehenden Teil, welcher sich aus einem einen Teil der Wägetechnik enthaltenden Bodenraum 2 und einem im wesentlichen die Antriebsmechanik enthaltenden Gehäuse 3 zusammensetzt, sowie dem Wägeraum 4. Der Wägeraum 4 wird weiterhin, als Windschutz dienend, von den Seitenwänden 5, 6 der Vorderwand 7 und der Abdeckwand 12 eingeschlossen. Der Boden 8 enthält eine Durchführung für den Träger der Waagschale 10. Allerdings kann die Waagschale auch auf einem L-förmigen Träger, der an einer aus der Rückwand des Wägeraums ragenden Koppelanordnung angebracht ist, aufliegen, wie dies in der EP 1 195 586 A1 beschrieben ist. Ebenso sind die verschiedenen in der genannten Schrift beschriebenen Ausgestaltungen der Waagschale und/oder der Merkmale des Wägeraums auch für die hier beschriebene Waage anwendbar.

Die Waage 1 steht vorzugsweise auf drei Füssen 22.

Die Seitenwände 5, 6, die Vorderwand 7 und die Abdeckwand 12 bestehen aus durchsichtigem Material, vorzugsweise aus Glas. Eine Ausführung aus gehärtetem Glas ist ebenfalls möglich, insbesondere für Anwendungen, bei welchen es gilt, die Sicherheit hinsichtlich des Umgangs in einer rauen Umgebung zu erhöhen oder die Handhabung, beispielsweise durch das Reinigen in einer Maschine, zu verbessern.

Die Seitenwände 5, 6 und die Abdeckwand 12 sind mittels eines Antriebs, beispielsweise eines Seilzugantriebs, zum Öffnen und Schliessen des Wägeraums bewegbar. Die Seitenwände 5, 6 und die Abdeckwand 12 sind jeweils lösbar an einer Führungsvorrichtung 17, 120 mit Hilfe von in die Führungsvorrichtungen 17, 120 integrierten Halterungen befestigt. Die Vorderwand 7 ist, ebenfalls lösbar, an einer Halterung 19 befestigt.

Durch eine Schwenkbewegung nach aussen mit leichtem Zug sind die Seitenwände 5, 6, die Vorderwand 7 und die Abdeckwand 12 in einfacher Weise zum Reinigen aus ihren Halterungen zu entfernen. Ausserdem besteht die Möglichkeit, die Vorderwand 7 sowie die bewegbaren Wände 5, 6, 12 durch eine einfache manuelle Betätigung in eine stabile Schräglage zu bringen.

In ihrer Offenstellung umschliessen die Seitenwände 5, 6 sowie die Abdeckwand 12 das Gehäuse 3. Dies ist deshalb möglich, weil das Gehäuse 3 in seiner Breite und seiner Höhe kleiner ausgestaltet ist als der Wägeraum 4.

Die Führungsvorrichtungen 17, 120 der Seitenwände 5, 6, sowie der Abdeckwand 12 sind mit Kupplungselementen (in Figur 1 nicht sichtbar) versehen, die der Verbindung der Seitenwände 5, 6 und der Abdeckwand 12 mit den Seilzügen eines Antriebs dienen. Jede Seitenwand 5, 6 ist separat mit einer Kupplungsbetätigung 18 versehen, ebenso die Abdeckwand 12 (in Figur 1 nicht sichtbar). Auf diese Weise sind alle denkbaren Kombinationen: einzeln, teilweise oder alle zusammen, des Schliessens und Öffnens der Seitenwände 5, 6 und der Abdeckwand 12 möglich.

Am oberen Ende des Gehäuses 3 besitzt die Waage 1 einen Griff 13. Neben der Tragefunktion hat der Griff 13 noch die Funktion einer Führungsschiene für das Öffnen und Schliessen der Abdeckwand 12. Über diese Schiene wird ein Führungselement 14 der Führungsvorrichtung 120 geführt, wobei die Halterung 15 der Abdeckwand 12 mit dem Führungselement 14 verbunden ist. Wie oben schon beschrieben, ist die Halterung 15 für die Abdeckwand 12 derart ausgebildet, dass die Abdeckwand 12 durch eine einfache Schwenkbewegung, beispielsweise zum Reinigen, abgetrennt werden kann.

An der Oberkante der Seitenwände 5, 6 sind für deren Halten in Rastverschlüssen (in Figur 1 nicht dargestellt) nach innen geneigte Rahmenleisten 11 vorgesehen, die an den abgeschrägten oberen Ecken 23, 24 der Vorderwand 7 und der Rückwand 9 anliegen. Die abgewinkelten Rahmenleisten 11 können andere obere Endkanten der Seitenwände 5, 6, gegebenenfalls aber auch der Abdeckwand 12, derart überdecken, dass sie für die äussere Luft eine Art Labyrinthdichtung bilden, so dass der Zutritt von Zugluft zum Inneren des Wägeraumes 4 über die Funktion des Windschutzes hinaus weiter erschwert wird. Im übrigen können die Rahmenleisten 11 aus durchsichtigem Material gefertigt sein.

Zum Festhalten der Vorderwand 7, der Seitenwände 5, 6 und der Abdeckwand 12 des Wägeraumes 4 ist keine besondere Betätigungseinrichtung zum Lösen einer Klemmung oder zu ihrem Festklemmen nötig. In diesem Sinne ist also die gezeigte Halterung 19, ebenso wie diejenigen der übrigen Wände, betätigungsfrei und dennoch in der Gebrauchslage fest.

Wie bereits oben erwähnt, überragt die Rückwand 9 des Wägeraumes 4 sowohl in ihrer Breite als auch in der Höhe das Gehäuse 3. Dadurch bietet sich die Möglichkeit von Aussparungen 20 in der Rückwand 9, die sowohl seitlich aber auch oben angeordnet sein können. Diese Aussparungen 20 sind mit auswechselbaren Clips 21 zum Verschliessen der Aussparungen 20 versehen. Beispielsweise können ein oder mehrere Clips 21 aus einer oder mehreren Aussparungen 20 entfernt werden, um irgendwelche Versorgungen, beispielsweise elektrische Zuleitungen und/oder Schläuche für zu wägende Flüssigkeitszugaben, hindurchzuführen. Damit können innerhalb des Wägeraumes Experimente unter Beobachtung der Gewichtsveränderung durchgeführt werden, ohne zusätzliches Öffnen des Wägeraumes 4, was Fehlmessungen verursachen könnte. Selbstverständlich sind solche Aussparungen 20 auch an den Seitenwänden 5 oder 6, der Vorderwand 7 und/oder der Abdeckwand 12 denkbar.

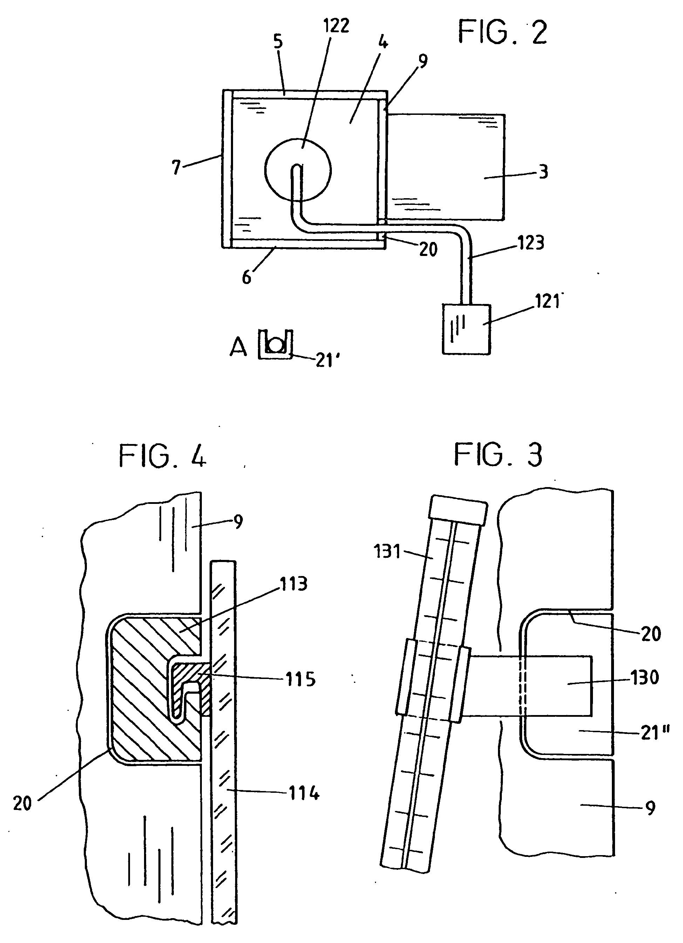

Eine mögliche Verwendung der Aussparungen 20 in der Rückwand 9 zeigt die Figur 2 in einer Ansicht von oben. Die in der Regel mittels der Clips 21 gegen Zugluft verschlossenen Aussparungen 20, können durch Entfernen der Clips 21 als Durchführungen für Leitungen, Schläuche etc. dienen. In Figur 2 wird beispielsweise eine Flüssigkeit von dem Behälter 121 über die Leitung 123 durch die Aussparung 20 in das Gefäss 122 zum Wägen geleitet. In vorteilhafter Weise kann anstelle der offenen Aussparung 20 in diese ein spezieller U-förmiger Clip 21' (siehe Einzelheit A) eingefügt werden, um der jeweiligen Zufuhrleitung einen besseren Halt zu geben und gegen Zugluft abzudichten.

Eine andere, weiterführende Anwendung der Clips 21" ist es, diese mit Halterungen 130 zu versehen, die in das Innere des Wägeraums 4 ragen, wie Figur 3 beispielhaft zeigt. An diesen Halterungen 130 können Leitungen, Schläuche, Thermometer 131 und/oder jegliche Art von Werkzeug, die für ein Experimentieren innerhalb des Wägeraums 4 notwendig sind, vorzugsweise abnehmbar, befestigt werden.

Eine weitere Anwendung der Aussparungen ist in Figur 4 gezeigt. Es sind nämlich Anwendungen der Waage mit Scheiben 114 der Seitenwände unterschiedlicher Höhe denkbar. Um diese Scheiben 114 ebenfalls mittels des erfindungsgemässen Antriebs betätigen zu können, bedarf es einer Führung im oberen Bereich der Scheibe 114. Hierzu dienen die Aussparungen 20 in der Rückwand 9, in die geeignete Clips 113 eingesetzt werden. An den Scheiben 114 sind Halter 115 befestigt, die gleitend in die Clips 113 eingreifen. Selbstverständlich können bei dieser Ausführungsform die Scheiben 114 ebenso einfach von der Waage entnommen werden, wie oben bei den Seitenwänden 5, 6 beschrieben.

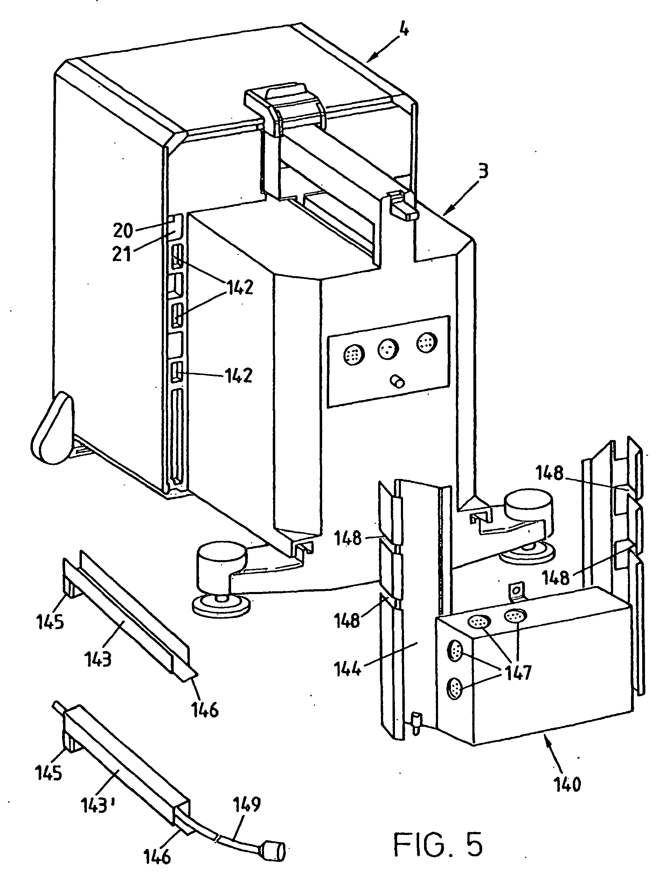

An das hintere Ende der Waage kann durch ein einfaches Befestigungsmittel, beispielsweise eine gerändelte Schraube, eine Zusatzeinheit 140 lösbar angebracht werden, wie Figur 5 zeigt. In dieser Zusatzeinheit 140 können Versorgungseinheiten, beispielsweise eine elektrische Batterie, oder auch eine Steuerungselektronik untergebracht sein. Die Zusatzeinheit 140 verfügt über Öffnungen 147 als Durchführungen für verschiedene Arten von Zufuhrleitungen. Damit lassen sich Experimentiereinrichtungen, die im Wägeraum 4 installiert sind, wie beispielsweise Dosiereinrichtungen etc., elektrisch versorgen, wobei die Zufuhrleitungen durch die mit speziellen Clips (vergleichbar mit den Clips 21') verschlossenen Aussparungen 20 ins Innere des Wägeraums 4 geführt sind. Damit jedoch die elektrischen Zufuhrleitungen und/oder etwaige Leitungen 123 für Flüssigkeiten (wie anhand der Figur 2 beschrieben) die sich beim Öffnen über das Gehäuse 3 schiebenden Seitenwände 5, 6 nicht beeinträchtigen oder gar blockieren, ist die Rückwand 9 hinten mit Vertiefungen 142 versehen, in die auf beiden Seiten des Gehäuses 3 jeweils Führungsrinnen 143 eingehängt werden können. Diese Führungsrinnen 143 sind in entsprechende Ausnehmungen 148 einer Haltevorrichtung 144 an der Einheit 140 eingehängt. Die Führungsrinnen 143 können beispielsweise aus Metall oder auch aus einem Polymermaterial gefertigt sein. Wie die Figur 5 zeigt, können die Führungsrinnen in verschiedener Weise ausgestaltet sein; beispielsweise ist die Führungsrinne 143' mit einer Abdeckung versehen und bildet somit eine Art Röhre. Auch sind die Führungsrinnen als seitliche Träger, die über eine oder mehrere der Aussparungen 20 hinwegreichend auf das Gehäuse 3 aufsteckbar ausgestaltet sind, denkbar. Weiterhin ist es denkbar in den Führungsrinnen eine einfache Elektronik oder einen Teil einer selben unterzubringen, insbesondere dann, wenn auf eine Zusatzeinheit 140 verzichtet wird.

In ihrer Breite sind die Führungsrinnen 143, 143' begrenzt, wobei zwei mal die Breite einer Führungsrinne 143, 143' addiert zur Breite des Gehäuses 3 kleiner sein sollte, als die Breite der Rückwand 9 damit die Bewegung der Seitenwände 5, 6 nicht behindert wird. An ihrem jeweiligen Ende besitzt eine Führungsrinne 143, 143' eine Einhängevorrichtung 145, 146, um an der Rückwand bzw. an der Haltevorrichtung 144 befestigt zu werden. Damit wird erreicht, dass der Wägeraum 4 nach aussen allseits geschlossen gehalten werden kann und dennoch von aussen her etwaige Experimentiereinrichtungen, wie sie im Detail in der EP 1 195 584 A1 beschrieben sind, im Inneren des Wägeraums 4 versorgt und bedient werden können.

Es versteht sich von selbst, dass das Gehäuse 3, das im wesentlichen die Antriebsmechanik enthält, und die Einheit 140 sich zu einem gemeinsamen Gehäuse ergänzen können. Die Führungsrinnen für Zufuhrleitungen jeglicher Art lassen sich in die Seitenwände dieses gemeinsamen Gehäuses integrieren und gegebenenfalls auch mit speziell dafür vorgesehenen Abdeckungen nach aussen verschliessen.

## Patentansprüche

1. Waage (1) mit einem Wägeraum (4), der teilweise von einem feststehenden Teil (8, 9) der Waage begrenzt ist sowie von mindestens einer Seitenwand (5, 6), einer Vorderwand (7) und einer Abdeckwand (12) wovon mindestens eine der Wände (5, 6, 12) zum Öffnen und Schliessen des Wägeraumes (4) mittels einer Führungsvorrichtung (17, 120) bewegbar ist, **dadurch gekennzeichnet, dass** in der mindestens einen Seitenwand (5, 6), der Vorderwand (7), der Abdeckwand (12) und/oder im feststehenden Teil der Waage (9) Aussparungen (20) zur Durchführung von Zufuhrleitungen (123) vorgesehen sind, wobei in die Aussparungen (20) auswechselbare dem Abdichten gegen Zugluft und/oder dem Halten von Zufuhrleitungen (123) dienende und/oder Halterungen (130) zum Befestigen von Werkzeug aufweisende Clips (21, 21', 21", 113) eingefügt sind.

2. Waage nach Anspruch 1, **dadurch gekennzeichnet, dass** die in die Aussparungen (20) eingefügten, dem Halten von Zufuhrleitungen (123) dienenden Clips, u-förmig sind.

3. Waage (1) nach Anspruch 1 oder 2, **dadurch gekennzeichnet, dass** in die Aussparungen (20) Clips (113) eingefügt sind, die in Zusammenwirken mit Haltern (115) als Teil einer Führungsvorrichtung für bewegbare Wände (114) unterschiedlicher Höhe vorgesehen sind.

4. Waage (1) nach einem der Ansprüche 1 bis 3, **dadurch gekennzeichnet, dass** eine als Vorderwand (7) ausgebildete, nicht bewegbare Wand sowie jede der als Seitenwände (5, 6) und/oder Abdeckwand (12) ausgebildeten bewegbaren Wände mittels einer Halterung am feststehenden Teil (8, 9) der Waage angebracht sind, wobei die jeweilige Wand (5, 6, 7, 12) mit der jeweiligen Halterung durch eine einfache manuelle Betätigung ver- und entriegelbar ist.

5. Waage (1) nach einem der Ansprüche 1 bis 4, **dadurch gekennzeichnet dass** sich die bewegbaren Wände (5, 6, 12) einzeln von Hand durch eine einfache Schwenkbewegung nach aussen mit leichtem Zug von der Waage (1) trennen lassen.

6. Waage (1) nach einem der Ansprüche 1 bis 4, **dadurch gekennzeichnet dass** die Vorderwand (7) sowie jede der als Seitenwände (5, 6) und/oder Abdeckwand (12) ausgebildeten bewegbaren Wände durch eine einfache manuelle Betätigung in eine stabile Schräglage bringbar ist.

7. Waage (1) nach einem der Ansprüche 1 bis 6, **dadurch gekennzeichnet dass** die den Wägeraum (4) begrenzenden als Vorderwand (7) und/oder Seitenwände (5, 6) und/oder Abdeckwand (12) ausgebildeten Wände frei von die Sicht in den Wägeraum (4) behindernden Stegen oder Rahmen sind.

8. Waage (1) nach einem der Ansprüche 1 bis 7, **dadurch gekennzeichnet, dass** die Waage (1) eine Zusatzeinheit (140) aufweist, die Versorgungseinheiten und/oder eine Steuerungselektronik enthält.

9. Waage (1) nach Anspruch 8, **dadurch gekennzeichnet, dass** die Zusatzeinheit (140) in den das Gehäuse (3) bildenden feststehenden Teil der Waage integriert ist.

10. Waage (1) nach Anspruch 8 oder 9, **dadurch gekennzeichnet, dass** die Zusatzeinheit (140) Durchführungen (147) für Zufuhrleitungen (123) aufweist.

11. Waage (1) nach Anspruch 10, **dadurch gekennzeichnet, dass** die Zusatzeinheit (140) mit dem als Rückwand (9) des Wägeraums (4) ausgebildeten feststehenden Teil der Waage durch Führungsrinnen (143, 143') zur Aufnahme der Zufuhrleitungen (123) verbunden ist.

12. Waage (1) nach Anspruch 11, **dadurch gekennzeichnet, dass** die Führungsrinnen in den das Gehäuse (3) bildenden feststehenden Teil der Waage integriert sind und mittels Abdeckungen nach aussen verschliessbar sind.

## Claims

1. Balance (1) comprising a weighing compartment (4) that borders on a stationary part (8, 9) of the balance and is otherwise enclosed by at least one side wall panel (5, 6), a front wall panel (7), and a top cover panel (12); wherein at least one of said panels is movable by means of a guiding device (17, 120) to open and close the weighing compartment (4); **characterized in that** at least one of the at least one side wall panel (5, 6), the front wall panel (7), the top cover panel (12), and/or the stationary part (8, 9) has cutout passages (20) for cables and conduits (123), wherein exchangeable clip-on devices (21, 21', 21", 113) serving to seal the openings against air drafts and/or to hold said conduits and/or comprising holder elements for fixing tools are inserted into the cutout passages (20).

2. Balance (1) according to claim 1, wherein said clip-on devices (21') being inserted in said cutout passages (20) and serving to hold said conduits are U-shaped.

3. Balance (1) according to claim 1 or 2, wherein clip-on devices (113) that are configured for guiding holder rails (115) connected to the movable side wall panels (114) of different height, are inserted into the cutout passages (20).

4. Balance (1) according to one of claims 1 to 3, wherein a non-movable panel configured as the front wall panel (7) and each movable panel, configured as the at least one side-wall panel (5, 6) and/or the top-cover panel (12) are attached to the stationary part (8, 9) by means of a holder element which allows each of said panels (5, 6, 7, 12) to be individually locked in place and released by a simple application of manual force.

5. Balance (1) according to one of claims 1 to 4, wherein at least one of the panels (5, 6, 12) that is movable is individually separable from the balance (1) by manually pulling said panel (5, 6, 12) outwards in a tilting movement.

6. Balance (1) according to one of claims 1 to 4, wherein the front wall panel (7) and each of the movable panels being configured as side wall panels (5, 6) and/or a top cover panel (12) can be set to a stable inclined position by a simple application of manual force.

7. Balance (1) according to one of claims 1 to 6, wherein the panels enclosing the weighing compartment (4) and being configured as a front wall panel (7) and/or side wall panels (5, 6) and/or a top cover panel (12) are free of sightblocking frame members, thereby allowing an unobstructed view into the weighing compartment (4).

8. Balance (1) according to one of claims 1 to 7, comprising an accessory unit (140) containing modules from the group of electric power supplies and control electronics.

9. Balance (1) according to claim 8, wherein the accessory unit (140) is integrated in the stationary part forming the housing (3).

10. Balance (1) according to claim 8 or 9, wherein the accessory unit (140) comprises passages (147) for the cables and conduits (123).

11. Balance (1) according to claim 10, wherein the accessory unit (140) is connected to the stationary part (8, 9) of the balance forming the rear wall (9) through guide channels (143, 143') for the cables and conduits (123).

12. Balance (1) according to claim 11, wherein the guide channels (143, 143') are integrated in the stationary part forming the housing (3) and can be closed to the outside by means of covers.

## Revendications

1. Balance (1) avec un espace de pesée (4) partiellement délimité par une partie fixe (8, 9) ainsi que par au moins une paroi latérale (5, 6), une paroi avant (7) et une paroi de couverture (12), parmi lesquelles au moins l'une des parois (5, 6, 12) peut être déplacée au moyen d'un dispositif de guidage (17, 120) pour l'ouverture et la fermeture de l'espace de pesée (4), **caractérisée en ce que** des évidements (20) sont prévus dans l'au moins une paroi latérale (5, 6), la paroi avant (7), la paroi de couverture (12) et/ou dans la partie fixe de la balance (9) pour le passage de câbles d'alimentation (123), dans lesquelles évidements (20) des clips (21, 21', 21", 113) remplaçables, servant à l'isolation contre les courants d'air et/ou au maintien des câbles d'alimentation (123) et/ou comportant des fixations (130) pour la fixation d'outils, sont insérés.

2. Balance selon la revendication 1, **caractérisée en ce que** les clips insérés dans les évidements (20) et servant au maintien de câbles d'alimentation (123) présentent une forme en U.

3. Balance (1) selon la revendication 1 ou 2, **caractérisée en ce que** des clips (113) conçus pour coopérer avec des supports (115) en tant que partie d'un dispositif de guidage pour des parois mobiles (114) de différentes hauteurs sont insérés dans les évidements (20).

4. Balance (1) selon l'une des revendications 1 à 3, **caractérisée en ce qu'**une paroi immobile formée comme paroi avant (7), ainsi que chacune des parois mobiles formées comme parois latérales (5, 6) et/ou comme paroi de couverture (12) sont fixés à la partie fixe (8, 9) de la balance, au moyen d'une fixation, dans laquelle chacune des parois (5, 6, 7, 12) peut être verrouillée avec ou déverrouillée de la fixation respective par simple actionnement manuel.

5. Balance (1) selon l'une des revendications 1 à 4, **caractérisée en ce que** les parois mobiles (5, 6, 12) peuvent être détachées manuellement de la balance (1), séparément, par un simple mouvement de pivotement vers l'extérieur avec une légère traction.

6. Balance (1) selon l'une des revendications 1 à 4, **caractérisée en ce que** la paroi avant (7) ainsi que chacune des parois mobiles formées comme parois latérales (5, 6) et/ou comme paroi de couverture (12) peuvent être mise dans une position inclinée stable par simple actionnement manuel.

7. Balance (1) selon l'une des revendications 1 à 6, **caractérisée en ce que** les parois délimitant l'espace de pesage (4), formées comme paroi avant (7) et/ou comme parois latérales (5, 6) et/ou comme paroi de couverture (12), sont exemptes de barres ou de cadres gênant la vue dans l'espace de pesage (4).

8. Balance (1) selon l'une des revendications 1 à 7, **caractérisée en ce que** la balance (1) comporte une unité supplémentaire (140) contenant des unités d'alimentation et/ou une électronique de commande.

9. Balance (1) selon la revendication 8, **caractérisée en ce que** l'unité supplémentaire (140) est intégrée dans la partie fixe de la balance formant le boîtier (3).

10. Balance (1) selon la revendication 8 ou 9, **caractérisée en ce que** l'unité supplémentaire (140) comporte des perçages (147) pour des câbles d'alimentation (123).

11. Balance (1) selon la revendication 10, **caractérisée en ce que** l'unité supplémentaire (140) est reliée à la partie fixe de la balance conçue en tant que paroi arrière (9) de l'espace de pesage (4) par des canaux de guidage (143, 143') pour l'admission des câbles d'alimentation (123).

12. Balance (1) selon la revendication 11, **caractérisée en ce que** les canaux de guidage sont intégrés dans la partie fixe de la balance formant le boîtier (3) et peuvent être fermés vers l'extérieur au moyen de couvercles.
